# FASCICULE DE BREVET EUROPEEN

(11) **EP 0 656 597 B1**
(45) Date de publication et mention de la délivrance du brevet: **15.01.1997**
(21) Numéro de dépôt: 94401442.2
(22) Date de dépôt: 27.06.1994
(51) Int. Cl.: G06K 7/06

(54) **Cadre de contact et connecteur pour carte**
Kartenkontaktrahmen und -verbinder
Card contact frame and connector

(30) Priorité: 01.12.1993 FR 9314371
(43) Date de publication de la demande: 07.06.1995
(73) Titulaire: FRAMATOME CONNECTORS INTERNATIONAL, 92400 Courbevoie (FR)
(72) Inventeur: Pernet, Michel, F-25300 Pontarlier (FR)
(74) Mandataire: Keib, Gérard

(56) Documents cités:
- EP-A- 0 213 041
- EP-A- 0 474 519
- EP-A- 0 494 503
- EP-A- 0 516 943

## Description

La présente invention a pour objet un cadre de contact pour connecteur pour cartes électroniques, d'un type présentant une première et une deuxième rangées d'éléments de contact électrique définissant des paires d'éléments de contact situés en vis-à-vis et comprenant également une première et une deuxième lame de contacct de détection.

Un tel cadre de contact est connu de la demande de brevet français FR-A-2623314, intitulée "Cadre de contact pour carte à puce, avec contact de fin de course". Il comporte deux lames de contact portées par un bord du cadre jouxtant une des rangées de contact, une des lames étant mobile et entrainée dans un mouvement d'actionnement parallèle à la direction d'insertion de la carte et opposé à cette direction.

Un tel cadre de contact est également connu de la demande de brevet européen EP-A-366513. Il comporte des lames de contact de fin de course qui sont surmoulées dans le cadre de contact et qui sont obtenues à partir des mêmes deux bandes dans lesquelles les éléments de contact sont pré-découpés, après successivement deux opérations spécifiques de cambrage à 90°.

Dans l'un et l'autre cas, les contact fin de course ne sont utilisables que dans le cas où la carte est insérée parallèlement au plan du cadre de contact. En outre, ils nécessitent des opérations spécifiques de fabrication, à savoir dans le cas de la demande FR-A-2623314, une fabrication séparée par insertion à force dans des fentes du cadre de contact, et dans le cas de la demande européenne EP-A-366513, en raison des deux étapes spécifiques de cambrage.

Le document EP-A-0 516 943 divulgue un cadre dans lequel une plage de contact additionelle est placée au-dessous de la plage de contact qui est portée à la masse de sorte que les deux plages viennent en contact lorsque la carte est placée en position, effectuant ainsi une détection effective de la position de la carte.

La présente invention concerne un cadre du type indiqué dans le paragraphe introductif, et qui:
- d'une part convienne à la fois à des connecteurs dans lesquels la carte est insérée parallèlement au plan de la carte, et à des connecteurs dans lesquels la carte est appliquée sur le cadre de support perpendiculairement à celui-ci, en particulier lorsque la carte est logée dans un couvercle articulé par rapport au cadre de contact et qui est rabattu sur celui-ci,
- et d'autre part ne nécessite pas d'opération de fabrication spécifique.

L'invention concerne ainsi un cadre de contact pour connecteur pour cartes électroniques, ledit cadre de contact présentant une première et une deuxième rangées d'éléments de contact électrique présentant une face de contact avec la carte et définissant des paires d'éléments de contact situés en vis-à-vis et comprenant également une première et une deuxième lame de contact de détection caractérisé en ce que la première et la deuxième lame de contact de détection sont disposées respectivement sur la première et la deuxième rangée, en vis-à-vis l'un de l'autre, au moins la première lame de contact ayant une longueur supérieure à celle des éléments de contact, ladite lame étant prolongée jusqu'à recouvrir au moins partiellement l'extrémité de la lame située en vis-à-vis, de manière que, lorsque la carte est mise en place par rapport au cadre de contact, la première et la deuxième lame de contact viennent en contact électrique.

Lors de sa mise en place, que ce soit par translation parallèle à la carte ou bien par un mouvement perpendiculaire à la carte, par exemple par rabattement d'un couvercle porte-carte, la carte appuie aussi bien sur les éléments de contact pour assurer la connexion électrique que sur la première lame pour assurer la détection.
D'autre part, en raison de leur disposition, les lames de contact viennent de fabrication en même temps et au cours des mêmes étapes que les éléments de contact.

Selon un mode de réalisation préféré, le cadre de contact comporte un élément de liaison connectant au moins une lame de contact à un élément de contact adjacent. Ceci permet en particulier d'utiliser la détection de présence de la carte pour une fonction électrique, par exemple de mise sous tension de celle-ci.

La première lame de contact présente avantageusement une extrémité distale en forme de crosse dont la concavité est dirigée du côté de la face de contact des éléments de contact, c'est-à-dire vers la carte. Cette extrémité distale en forme de crosse présente avantageusement un prolongement en forme de crosse dont la concavité est dirigée du côté opposé à la face de contact des éléments de contact, c'est-à-dire du côté opposé à la carte. Par appui sur l'extrémité en forme de crosse, en même temps que sur les extrémités similaires des éléments de contact, la carte permet la détection de présence par mise en contact électrique du prolongement en forme de crosse, incurvé dans le sens opposé, avec l'extrémité de la deuxième lame de contact A cet effet, la deuxième lame de contact peut alors présenter une extrémité distale en forme de palette, ledit prolongement de la première lame venant en recouvrement avec au moins une partie de ladite extrémité distale en forme de palette.

L'invention concerne également un connecteur présentant un cadre de contact tel que défini ci-dessus.
Selon un mode de réalisation avantageux, il comporte un couvercle comprenant un logement de la carte et qui est articulé par rapport au cadre de contact. La première et la deuxième lame de contact permettent alors aussi bien une détection de présence que de fin de course de la carte.
Selon un deuxième mode de réalisation, le connecteur présente un guide de carte permettant son insertion dans une direction nominale parallèle à la carte. Dans ce cas, les lames de contact permettent, selon leur positionnement, soit une simple détection de présence de la carte, soit une détection à la fois de présence et de fin de course de la carte. Dans ce deuxième cas, il est avantageux que le guide soit profilé de manière à appuyer la carte en direction du cadre de contact et enfoncer les éléments de contact et au moins la première lame de contact, au voisinage d'une position de fin de course de la carte.

D'autres caractéristiques et avantages de l'invention apparaîtront mieux à la lecture de la description qui va suivre, donnée à titre d'exemple non limitatif, en liaison avec les dessins qui représentent:

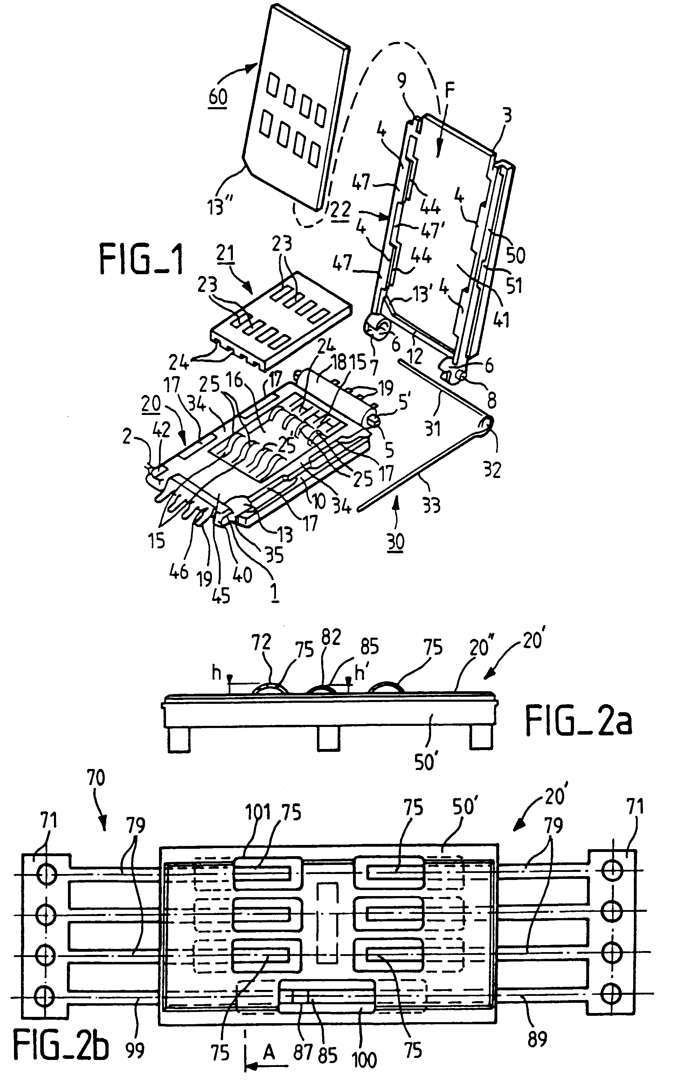

- la figure 1, un connecteur pour carte selon la demande de brevet français 93 08397 déposée le 8 juillet 1993 par la Demanderesse;

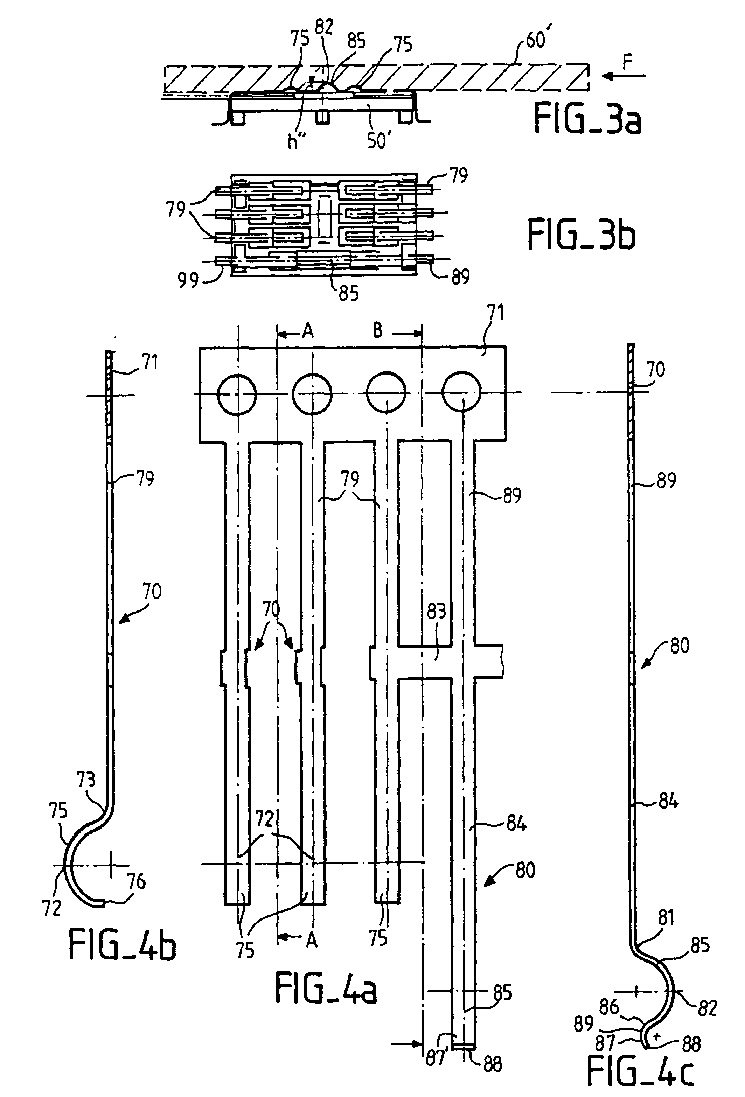

- les figures 2a et 2b, respectivement en vue de côté et en vue de dessus, un cadre selon l'invention, après son obtention par surmoulage et avant découpe des rives des bandes conductrices, les figures 3a et 3b représentant ce même cadre après découpe des rives et pliage des extrémités de contact externes;

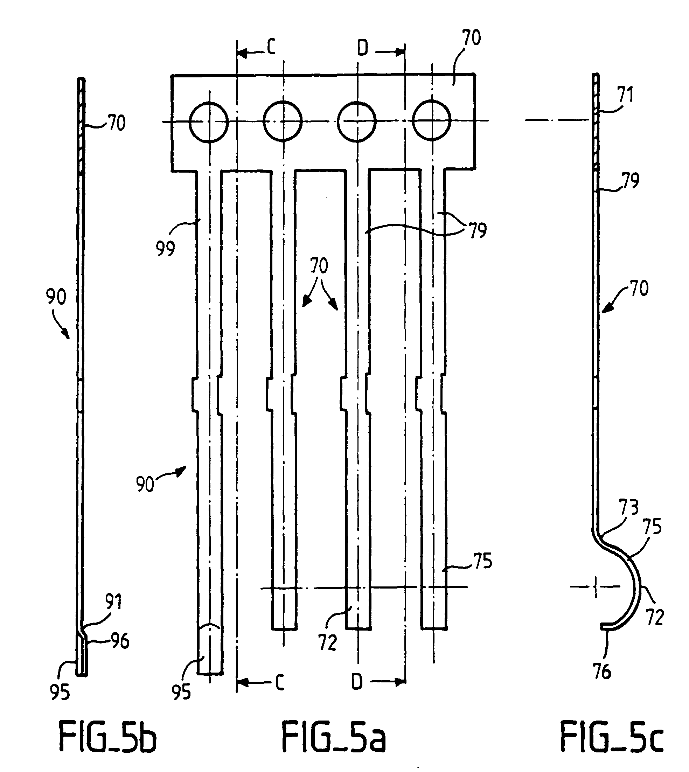

- les figures 4a,4b et 4c, respectivement en vue de dessus, encoupe AA, et en coupe BB, une portion de bande conductrice correspondant à une rangée d' éléments de contact, et les figures 5a, 5b et 5c, respectivement en vue de dessus, en coupe CC et en coupe DD, une portion de bande conductrice correpondant à l'autre rangée d'éléments de connexion.

A la figure 1, un cadre ou socle désigné par le repère général 20 comporte des lames 15 formant des éléments de contact moulés dans la masse de celui-ci. Chaque lame comporte une extrémité 19 qui dépasse d'un bord longitudinal 46 et une autre extrémité recourbée 25 qui dépasse de la face supérieure 45 du socle 20. Les extrémités 25 sont disposées dans une ouverture sensiblement rectangulaire 16 qui leur permet un débattement vertical.
Un capot 22 présente en dessous de sa face inférieure deux glissières longitudinales 4 situées au voisinage de ses bords longitudinaux de manière à guider la carte 60 dans les rainures 44. Le capot 22 est articulé (5,5',6,7) sur le socle, avec rappel par ressort 30. Le verrouillage du capot 22 sur le socle 20 s'effectue par coopération des ergots latéraux 1 et 2 du socle 20 avec les encoches des ergots 3 et 9 qui font partie des glissières d'introduction 4 de la carte dans le capot 22. La carte est introduite dans les glissières 4 jusqu'à venir en butée 12 au voisinage des logements cylindriques 6. La carte comporte un pan coupé 13'' qui vient s'appuyer sur le plan incliné 13' formant détrompeur. Le capot 22 est rabattu sur le socle 20 et la fermeture s'effectue par déformation élastique du boîtier 22 grâce en particulier aux chanfreins 43 qui viennent repousser les faces interne 3' et externe 9' des ergots 3 et 9, et/ou par la présence d'un jeu latéral entre les charnières.
Le déverrouillage s'effectue par poussée dans le sens de la flèche 14 par déformation latérale du capot 22 de manière à libérer les ergots 1 et 2, ce qui permet au capot 22 de s'ouvrir sous l'action du ressort 30.
En se reportant maintenant aux figures 2 à 5, un cadre ou socle 20' selon l'invention comporte, outre des éléments de contact 70 organisés suivant deux rangées, et ayant des extrémités de contact externes recourbées 79 et des extrémités de contact 75 en forme de crosse pour venir en contact avec la carte et dont le sommet 72 dépasse d'une hauteur h d'un bord supérieur 20'' du cadre 20', une paire de contacts de détection ou lames de contact 80 et 90. Aux figures 2a et 2b, le cadre 50' a été surmoulé autour des deux bandes de contact métalliques qui présentent encore leurs rives 71. Aux figures 3a et 3b, les rives 71 ont été coupées et les extrémités externes de contact 79 et 89 ont été pliées pour permettre un contact à plat. Les lames de contact 80 et 90 sont portées chacune par une des bandes de contact et leurs extrémités distales sont logées dans des lumières 100, les extrémités distales des éléments de contact 70 étant logées dans des lumières 101. Les contacts se trouvent en vis-à-vis et en recouvrement partiel de leurs extrémités 87 et 95. Le contact 80 présente , après cambrage en 83,une région en forme de crosse 85 dont le sommet 82 est dirigé vers la carte 60', et dont l'extrémité distale se prolonge à partir de la zone 86 de changement de concavité, par une deuxième région en forme de crosse 89, de plus petit rayon et qui se termine en 88. La crosse 89 a sa concavité dirigé dans le sens opposé à la carte 60, et son sommet 87 fait face à l'extrémité 95 en forme de palette cambrée en 91 de l'autre contact de la paire.

Lorsque la carte 60' est présentée, soit dans le sens de la flèche F (Fig. 3a), soit par rabattement d'un couvercle tel que celui représenté à la figure 1, la carte 60' appuie mécaniquement sur le sommet 82 de la crosse 85 et enfonce le contact 80 grâce à l'élasticité de la lame 84 qui le constitue. Cet enfoncement a pour conséquence que le sommet 87 de la crosse 89 vienne en contact mécanique et électrique avec la palette 95. La face de contact 72 constituée par le sommet de la crosse 75 des éléments de contact 70 est également enfoncée pour assurer un contact éléctrique avec la carte 60'.

Sur les dessins, on a représenté les contacts 80 et 90 comme étant plus longs que les contacts 70. En fait, il suffit que ce soit le cas pour un seul d'entre eux. Dans le cas où la carte 60' est introduite de manière classique suivant la flèche F, les contacts 80 et 90 remplissent au moins la fonction de détection de présence. Ils peuvent également remplir la fonction de détection de fin de course, soit en disposant d'un contact 80 de grande longueur de manière que la carte 60' ne viennre enfoncer sa crosse 85 qu'en fin de course, soit en munissant le connecteur d'une rampe d'introduction n'appliquant la carte 60' sur les crosses 75 et 85 qu'en fin de course. Dans le cas où la connexion de la carte s'effectue par rabattement d'un couvercle tel que 22, les contacts 80 et 90 remplissent bien entendu la fonction de détection de fin de course.

Dans le cas de connecteurs munis d'un couvercle tel que 22, il est avantageux de positionner le sommet 82 de la crosse 85 à une hauteur h' inférieure à celle des sommets 72 des crosses 75 des contacts 70 (fig. 2a). Par ailleurs, une fonction de détection de présence de cartes dite anticipée permettant par exemple une alimentation préalable, peut être obtenue en positionnant le sommet 82 à une hauteur h'' supérieure à h (fig. 3a).

Comme le montre la description ci--dessus, la mise en oeuvre des contacts selon l'invention ne nécessite aucune étape de fabrication spécifique. Ceci permet une économie notable sur les frais de fabrication.En outre, une seule bande continue peut servir pour les deux rangées, à condition qu'elle comporte des tronçons comprenant les contacts 80 et 90 en popsition appropriée.

On remarquera à la figure 4a un élément de pontage 83 connecte électriquement un des contacts, ici 80, mais ce pourrait être le contact 90, à un contact 70 adjacent. Ceci permet en particulier d'utiliser les contacts 80 et 90 également pour une fonction électrique, en particulier de mise sous tension de la carte 60'.

## Revendications

1. Cadre de contact pour connecteur pour cartes électroniques, ledit cadre de contact présentant une première et une deuxième rangées d'éléments de contact électrique présentant une face de contact avec la carte et définissant des paires d'élements de contact situés en vis-à-vis et comprenant également une première et une deuxième lame de contact de détection caractérisé en ce que la première (80) et la deuxième (90) lame de contact de détection sont disposées respectivement sur la première et la deuxième rangée, en vis-à-vis l'une de l'autre, au moins la première lame de contact (80) ayant une longueur supérieure à celle des éléments de contact, cette lame étant prolongée jusqu'à recouvrir au moins partiellement l'extrémité de la lame située en vis-à-vis, de manière que, lorsque la carte est mise en place par rapport au cadre de contact, la première (80) et la deuxième (90) lame de contact viennent en contact électrique.

2. Cadre de contact selon la revendication 1, caractérisé en ce que la première lame (80) présente une extrémité distale en forme de crosse (85) dont la concavité est dirigée du côté de la face de contact (72) des éléments de contact électreque (70).

3. Cadre de contact selon la revendication 2 caractérisé en ce que ladite extrémité distale en forme de crosse (85) présente un prolongement (89) en forme de crosse dont la concavité est dirigée du côté opposé à la face de contact (72) des éléments de contact électrique (70).

4. Cadre de contact selon la revendication 3 caractérisé en ce que la deuxième lame de contact (90) présente une extrémité distale (95) en forme de palette , ledit prolongement (89) de la première lame (80) venant en recouvrement avec au moins une partie de ladite extrémité distale (95) en forme de palette.

5. Cadre de contact selon une des revendications précédentes, caractérisé en ce qu'il comporte un élément de liaison (83) connectant au moins une lame de contact (80,90) à un élément de contact (70) adjacent.

6. Cadre de contact selon la revendication 2 caractérisé en ce que ladite extrémité distale en forme de crosse (85) présente un sommet (82) dépassant d'un bord du cadre de contact d'une hauteur (h') inférieure à la hauteur (h) dont un sommet (72) des éléments de contact (70) dépasse dudit bord (20").

7. Cadre de contact selon la revendication 2, caractérisé en ce que ladite extrémité distale en forme de crosse présente un sommet (82) dépassant d'un bord du cadre de contact d'une hauteur (h") supérieure à la hauteur (h) dont un sommet (72) des éléments de contact (70) dépasse dudit bord (20").

8. Connecteur pour cartes électroniques caractérisé en ce qu'il comporte un cadre de contact selon une des revendications précédentes.

9. Connecteur selon la revendication 8, caractérisé en ce qu'il comporte un couvercle comprenant un logement de la carte et qui est articulé par rapport au cadre de contact.

10. Connecteur selon la revendication 9, caractérisé en ce qu'il comporte un guide de carte profilé de manière à appuyer la carte en direction du cadre de contact et enfoncer la carte en direction du cadre de contact et enfoncer les éléments de contact et au moins la première lame (80) au voisinage d'une position de fin de course de la carte.

## Patentansprüche

1. Kontaktrahmen für Stecker für elektronische Karten, wobei der besagte Kontaktrahmen eine erste und eine zweite Reihe mit elektrischen Kontaktelementen aufweist, die eine Kontaktfläche mit der Karte haben und gegenüberliegende Kontaktelementpaare darstellen, und außerdem eine erste und zweite Kontaktfeder zur Erkennung umfaßt,
dadurch gekennzeichnet, daß
die erste (80) und die zweite (90) Kontaktfeder zu Erkennung jeweils in der ersten und der zweiten Reihe angeordnet sind, so daß sie einander gegenüberliegen, wobei wenigstens die erste Kontaktfeder (80) eine Länge hat, die größer als die der Kontaktelemente ist, wobei diese Feder so weit verlängert ist, daß sie wenigstens teilweise das Ende der gegenüberliegenden Feder überragt, so daß beim Einstecken der Karte in den Kontaktrahmen zwischen erster (80) und zweiter (90) Kontaktfeder elektrischer Kontakt hergestellt wird.

2. Kontaktrahmen nach Anspruch 1, dadurch gekennzeichnet, daß die erste Feder (80) ein äußeres Ende in Form eines Krummhakens (85) hat, dessen Ausbuchtung zur Seite der Kontaktfläche (72) der elektrischen Kontaktelemente (70) gerichtet ist.

3. Kontaktrahmen nach Anspruch 2, dadurch gekennzeichnet, daß das besagte äußere Ende in Form eines Krummhakens (85) eine Verlängerung (89) in Form eines Krummhakens darstellt, deren Ausbuchtung zu der Seite hin gerichtet ist, die der Kontaktfläche (72) der elektrischen Kontaktelemente (70) gegenüberliegt.

4. Kontaktrahmen nach Anspruch 3, dadurch gekennzeichnet, daß die zweite Kontaktfeder (90) ein äußeres Ende (95) in Form einer Palette hat, wobei die besagte verlängerung (89) der ersten Feder (80) wenigstens einen Teil des besagten äußeren Endes (95) in Form einer Palette überragt.

5. Kontaktrahmen nach einem der vorangehenden Ansprüche, dadurch gekennzeichnet, daß er ein Verbindungselement (83) umfaßt, das wenigstens eine Kontaktfeder (80, 90) mit einem benachbarten Kontaktelement (70) verbindet.

6. Kontaktrahmen nach Anspruch 2, dadurch gekennzeichnet, daß das besagte äußere Ende in Form eines Krummhakens (85) einen Scheitel (82) hat, der über einen Rand des Kontaktrahmens mit einer Höhe (h') hinaustritt, die kleiner als die Höhe (h) eines Scheitels (72) der Kontaktelemente (70) ist, die über diesen Rand (20") hinaustreten.

7. Kontaktrahmen nach Anspruch 2, dadurch gekennzeichnet, daß das besagte äußere Ende in Form eines Krummhakens einen Scheitel (82) hat, der über einen Rand des Kontaktrahmens mit einer Höhe (h") hinaustritt, die größer als die Höhe (h) eines Scheitels (72) der Kontaktelemente (70) ist, die über diesen Rand (20") hinaustreten.

8. Stecker für elektronische Karten, dadurch gekennzeichnet, daß er einen Kontaktrahmen nach einem der vorangehenden Ansprüche umfaßt.

9. Stecker nach Anspruch 8, dadurch gekennzeichnet, daß er eine Haube umfaßt, die ein Gehäuse für die Karte umfaßt und mit dem Kontaktrahmen beweglich verbunden ist.

10. Stecker nach Anspruch 9, dadurch gekennzeichnet, daß er eine Kartenführung umfaßt, die profiliert ist, so daß die Karte in Richtung des Kontaktrahmens abgestützt wird und die Karte in Richtung auf den Kontaktrahmen gelenkt wird und die Kontaktelemente und wenigstens die erste Feder (80) in die Nähe einer Endposition der eingesteckten Karte gelenkt werden.

## Claims

1. Contact frame for a connector for electronics cards, the said contact frame having a first and second row of electrical contact elements having a face for contact with the card and defining pairs of contact elements located opposite each other and also comprising a first and second detection contact blade, characterized in that the first (80) and second (90) detection contact blades are arranged respectively on the first and second rows, opposite each other, at least the first contact blade (80) being longer than the contact elements, this blade being extended until it at least partially covers the end of the blade located opposite, so that when the card is put in place relative to the contact frame the first (80) and second (90) contact blades come into electrical contact.

2. Contact frame according to Claim 1, characterized in that the first blade (80) has a crook-shaped distal end (85) the concavity of which is turned towards the contact-face side (72) of the electrical contact elements (70).

3. Contact frame according to Claim 2, characterized in that the said crook-shaped distal end (85) has a crook-shaped extension (89), the concavity of which is turned towards the side of the electrical contact elements (70) opposite the contact face (72).

4. Contact frame according to Claim 3, characterized in that the second contact blade (90) has a paddle-shaped distal end (95), the said extension (89) of the first blade (80) coming to overlap at least a part of the said paddle-shaped distal end (95).

5. Contact frame according to one of the preceding claims, characterized in that it includes a linking element (83) connecting at least one contact blade (80,90) to an adjacent contact element (70).

6. Contact frame according to Claim 2, characterized in that the said crook-shaped distal end (85) has an apex (82) extending beyond one edge of the contact frame by a height (h') less than the height (h) by which an apex (72) of the contact elements (70) extends beyond the said edge (20")

7. Contact frame according to Claim 2, characterized in that the said crook-shaped distal end has an apex (82) extending beyond one edge of the contact frame by a height (h") greater than the height (h) by which an apex (72) of the contact elements (70) extends beyond the said edge (20").

8. Connector for electronics cards, characterized in that it includes a contact frame according to one of the preceding claims.

9. Connector according to Claim 8, characterized in that it includes a cover which comprises a housing for the card and which is articulated with respect to the contact frame.

10. Connector according to Claim 9, characterized in that it includes a card guide which is profiled so as to press the card towards the contact frame and insert the card towards the contact frame and insert the contact elements and at least the first blade (80) in the vicinity of an end-of-travel position of the card.
